Europäisches Patentamt

European Patent Office

Office européen des brevets

(19)

(11) Numéro de publication: **0 280 601**
**A1**

## (12) DEMANDE DE BREVET EUROPEEN

(21) Numéro de dépôt: 88400250.2

(22) Date de dépôt: 03.02.88

(51) Int. Cl.⁴: **B 62 L 3/02**
**B 62 L 3/06**

(30) Priorité: 11.02.87 FR 8701711

(43) Date de publication de la demande:
31.08.88 Bulletin 88/35

(84) Etats contractants désignés:
BE CH DE ES GB IT LI LU NL

(71) Demandeur: M.B.K. Industrie Société Nouvelle
Motobecane Société Anonyme Française
Zone Industrielle de Rouvroy
F-02322 Saint Quentin (FR)

(72) Inventeur: Rakover, Jean-Jacques
3 rue André Mathias Morcourt
F-02100 Saint Quentin (FR)

(74) Mandataire: Maureau, Bernard et al
Cabinet GERMAIN & MAUREAU Conseils en Propriété
Industrielle 64, rue d'Amsterdam
F-75009 Paris (FR)

(54) Dispositif destiné à ralentir une bicyclette.

(57) Dispositif destiné à ralentir une bicyclette, en particulier une bicyclette tout-terrain ou de descente.

Il se compose d'un dispositif supplémentaire de freinage (7), indépendant de celui de la bicyclette, à traction classique par câble (10) placé partiellement sous gaine(s) (13,14) et formant commande de transmission entre une manette de traction (12), verrouillable en position de traction de ce câble (10), et le frein supplémentaire (8) associé à ce dispositif (7), un dispositif limiteur de force (15) étant par ailleurs interposé sur cette commande de transmission (10, 13, 14) entre cette manette (12) et ce frein supplémentaire (8).

FIG.1

EP 0 280 601 A1

**Description**

La présente invention se rapporte à un dispositif destiné à ralentir une bicyclette, en particulier une bicyclette tout-terrain ou de descente.

Le freinage d'une bicyclette tout-terrain dans les parties descendantes exige beaucoup de dextérité et de concentration de la part de l'usager, de sorte qu'il ne peut pas ainsi consacrer une attention maximale à la conduite de son engin.

La présente invention a pour but de faciliter la conduite d'une bicyclette, en particulier d'une bicyclette tout-terrain ou de descente, au moyen d'un dispositif ralentisseur installé sur la bicyclette et que l'usager a simplement à enclencher lorsqu'il désire ralentir la bicyclette, puis à désenclencher lorsqu'il ne désire plus le faire. Ce dispositif se compose d'un dispositif supplémentaire de freinage, indépendant de celui de la bicyclette, à traction classique par câble placé partiellement sous gaine(s) et qui forme commande de transmission entre une manette de traction, verrouillable en position de traction du câble, et le frein supplémentaire, associé à ce dispositif. Un dispositif limiteur de force est interposé, sur cette commande de transmission, entre la manette et ce frein supplémentaire. Ce dispositif limiteur de force est, par exemple, un dispositif élastique constitué par un ressort de répulsion axiale qui est interposé sur la commande de transmission, en prenant appui, par exemple, entre un point fixe et un arrêt de gaine, ou entre deux arrêts de gaine.

De toute façon, l'invention sera bien comprise, et ses avantages et autres caractéristiques ressortiront, au cours de la description suivante d'un exemple non limitatif de réalisation, en référence aux dessins schématiques annexés dans lesquels :

Figure 1 est une vue de face en perspective d'une bicyclette tout-terrain équipée de ce dispositif ;

Figure 2 est une vue détaillée, en coupe selon II-II de la figure 1, du dispositif limiteur de force ;

Figure 3 est une vue en perspective de la partie du guidon de la bicyclette qui comporte la manette verrouillable servant à l'actionnement de ce dispositif ;

Figure 4 est une vue, en coupe selon IV-IV de la figure 3, du dispositif de verrouillage de cette manette.

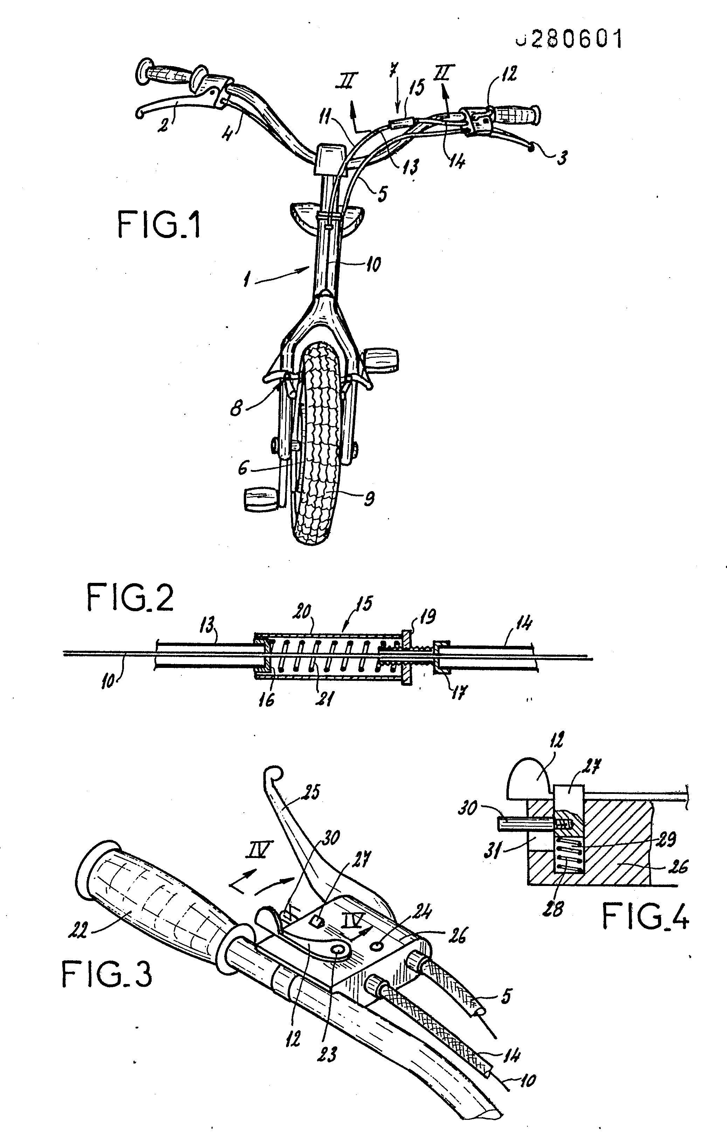

Sur la figure 1 est représentée une bicyclette tout-terrain 1. Cette bicyclette comporte, aussi bien à l'avant qu'à l'arrière, un dispositif de freinage classique à manettes de frein 2,3, et câbles sous gaines 4,5 agissant sur deux freins à tambour, par exemple le tambour 6 pour la roue avant, seul visible sur le dessin.

Pour ralentir en descente cette bicyclette 1, sans pour cela faire usage du dispositif de freinage normal 2-6 de cet engin, il est ajouté un dispositif de freinage supplémentaire, ou auxiliaire 7, qui est totalement indépendant de ce dispositif de freinage normal 2-6. Ce ralentisseur 7 comporte un dispositif de freinage 8 à patins qui agissent sur la jante de la roue avant 9, et à traction classique par câble 10 partiellement sous gaine 11. Le câble 10 et la gaine 11 constituent la commande de transmission de ce ralentisseur, entre son frein 8 et une manette de traction 12 qui est verrouillable en position de traction, pour laquelle le ralentisseur est actionné. La gaine 11 est interrompue vers son milieu, et est constituée en réalité de deux portions de gaine 13,14 entre lesquelles est intercallé un dispositif limiteur de force 15.

Le limiteur de force 15 est montré en détail sur la figure 2. Les deux portions de gains 13,14 se terminent dans deux arrêts de gaine 16,17 en forme de coupelles. L'arrêt 17 comporte une tige filetée qui se visse dans la plaque de fond radiale 19 d'un corps cylindrique 20, coaxial au câble de traction 10, et ouvert à son extrémité opposée à cette plaque 19. La section circulaire du tube 20 est telle que son diamètre intérieur soit très légèrement supérieur au diamètre extérieur de la coupelle constituant l'autre arrêt 16, afin de permettre le coulissement aisé et pratiquement sans frottement de cette coupelle 16 dans le tube 20. La coupelle 16 prend appui, du côté opposé à la portion de gaine 13, sur une des extrémités d'un ressort hélicoïdal de répulsion 21. Ce ressort 21 est placé à l'intérieur du cylindre 20, coaxialement au câble de frein 10, et son autre extrémité prend appui sur la plaque de fond 19. L'action élastique du ressort 21 sur les deux arrêts 16,17 des portions de gains 13,14 a pour effet de limiter automatiquement la force de freinage.

La distance, à vide, c'est-à-dire lorsque le câble 10 est détendu, entre les patins de frein et la jante de la roue 9, est réglable, de manière connue en soi, en vissant ou en dévissant plus ou moins l'arrêt 17 : on compense ainsi, en particulier, l'usure des freins.

Le dispositif d'enclenchement du ralentisseur 7, au moyen de la manette verrouillable 12, est représenté aux figures 3 et 4. La manette 12 est placée près de la poignée 22, de façon à pouvoir être actionnée avec le pouce. Elle est articulée autour d'un axe 23, parallèle à l'axe d'articulation 24 de la manette 25 du frein-tambour, et porté par le même bloc de support 26. Dans la position représentée à la figure 3, la manette 12 est au repos, et le câble 10 n'est pas tendu.

En poussant la manette 12 vers l'avant de la bicyclette, c'est-à-dire en la faisant tourner dans le sens horaire, comme indiqué par la flèche sur la figure 3, le câble 10 est tiré et se tend, de sorte que les patins de frein viennent frotter contre la jante, l'effort de freinage étant limité par le limiteur de force 15. Dans son mouvement de rotation, la manette 12 enfonce un pène de verrouillage 27, qui est monté sur un ressort 28 dans une cavité 29 du bloc 26 (figure 4). La cavité 29 est cylindrique et d'axe parallèle à l'axe d'articulation 23. Le pène 27 présente, bien entendu, une rampe douce du côté tourné vers la poignée 22, et une rampe droite et abrupte du côté tourné vers la manette de frein 25. Le pène 27 s'oppose, après s'être relevé lorsque la manette 12 a poursuivi son mouvement dans le sens horaire, au retour de cette manette dans sa postion de repos de la figure 3.

Le déverrouillage de la manette 12, et donc le désenclenchement du ralentisseur 7, s'effectue en pressant vers le bas un doigt 30, solidaire du pène 27 et coulissant dans une rainure latérale 31 du bloc 26 : le pène 27 est alors escamoté contre la force du ressort 28, ce qui libère la manette 12.

L'invention est bien entendu pas limitée à l'exemple de réalisation qui vient d'être décrit. Le ralentisseur 7 peut être totalement indépendant de la bicyclette, et se fixer sur son cadre par un ensemble d'attaches amovibles, telles que des colliers. Le limiteur de force 15 peut être installé à l'une ou à l'autre des extrémités de la gaine : dans ce cas, une des extrémités du ressort 21 appuie sur l'arrêt de gaine, tandis que l'autre extrémité appuie sur un point fixe de support du ralentisseur. Le ressort 21 peut être remplacé par un bloc de caoutchouc ou d'élastomère, etc....

## Revendications

1 - Dispositif destiné à ralentir une bicyclette, caractérisé en ce qu'il se compose d'un dispositif supplémentaire de freinage (7), indépendant de celui de la bicyclette, à traction classique par câble (10) placé partiellement sous gaine(s) (13,14) et formant commande de transmission entre une manette de traction (12), verrouillable en position de traction de ce câble (10), et le frein supplémentaire (8) associé à ce dispositif (7), un dispositif limiteur de force (15) étant par ailleurs interposé sur cette commande de transmission (10,13,14) entre cette manette (12) et ce frein supplémentaire (8).

2 - Dispositif selon la revendication 1, caractérisé en ce que le dispositif limiteur de force (15) est un dispositif élastique.

3 - Dispositif selon la revendication 2, caractérisé en ce que le dispositif limiteur de force (15) comporte un organe de répulsion axiale élastique (21), coaxial au câble de traction (10) et appuyant sur au moins un arrêt de gaine (16,17).

4 - Dispositif selon l'une des revendications 1 à 3, caractérisé en ce que le dispositif limiteur de force (15) comporte en outre un dispositif d'ajustement du frein supplémentaire (8).

5 - Dispositif selon l'une des revendications 1 à 4, caractérisé en ce qu'il est totalement indépendant de la bicyclette et se fixe sur le cadre de celle-ci par des attaches amovibles.

0280601

FIG.1

FIG.2

FIG.3

FIG.4

Office européen
des brevets

**RAPPORT DE RECHERCHE EUROPEENNE**

Numero de la demande

EP  88 40 0250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 546 960  (MASUDA)<br>* Colonne 3, ligne 58 - colonne 4, ligne 16; figures 1-6 *<br>--- | 1 | B 62 L    3/02<br>B 62 L    3/06 |
| A | US-A-3 567 250  (WOLF)<br>* Colonne 4, ligne 51 - colonne 5, ligne 5; figure 9 *<br>--- | 1 | |
| A | US-A-4 351 418  (WOODRING)<br>* Colonne 4, lignes 12-53; figures 1-4 *<br>----- | 2,3 | |

DOMAINES TECHNIQUES RECHERCHES (Int. Cl.4)

B 62 L    1/00
B 62 L    3/00

Le présent rapport a été établi pour toutes les revendications

| Lieu de la recherche | Date d'achèvement de la recherche | Examinateur |
|---|---|---|
| LA HAYE | 20-05-1988 | HARTEVELD C.D.H. |